# EUROPEAN PATENT APPLICATION

(11) **EP 4 454 882 A1**
(43) Date of publication of application: **30.10.2024**
(21) Application number: 22911200.8
(22) Date of filing: 20.12.2022
(51) Int. Cl.: B32B 27/00, B32B 27/04, C09D 5/02, C09D 191/06, D21H 17/27, D21H 19/18, C09D 7/63

(54) **AQUEOUS DISPERSION, FILM, PACKAGING MATERIAL AND MULTILAYER BODY**

(30) Priority: 20.12.2021 JP 2021205716
(71) Applicant: Mitsubishi Chemical Corporation, Tokyo 100-8251 (JP)
(72) Inventor: ISHII, Taku, Tokyo 100-8251 (JP); NAKAMURA, Takeshi, Tokyo 100-8251 (JP)
(74) Representative: Vossius & Partner Patentanwälte Rechtsanwälte mbB
(86) International application number: PCT/JP2022/046773
(87) International publication number: WO 2023/120498

(57) **Abstract**

An aqueous dispersion comprising a nonionic surfactant (A), an anionic surfactant (B), and a wax (C) dispersed in water, wherein the wax (C) comprises an ester compound having a fatty acid-derived structural moiety and an aliphatic alcohol-derived structural moiety, and the content of the nonionic surfactant (A) is 40 to 99 parts by mass based on 100 parts by mass of the total of the nonionic surfactant (A), the anionic surfactant (B), and the wax (C), and is 5 to 50 parts by mass based on 100 parts by mass of the total of the nonionic surfactant (A), the anionic surfactant (B), the wax (C), and the water.

## Description

### Technical Field

The present invention relates to an aqueous dispersion of a nonionic surfactant. Specifically, the present invention relates to an aqueous dispersion of a nonionic surfactant that exhibits low viscosity and excels in storage stability and workability even when the concentration of the nonionic surfactant is increased, and is useful as a coating agent capable of imparting water and oil resistance to a substrate. The present invention also relates to a film formed from the aqueous dispersion, and to a packaging material and a multilayer structure each having the film.

### Background Art

Packaging materials for foods, such as snacks and fried foods, are conventionally pulp substrates, such as paper, or plastic substrates that are rendered resistant to water and oil by the application of a coating agent. For example, the coating agents are fluorine compounds or paraffin waxes.

While fluorine compounds are excellent in water and oil resistance, there are concerns that they are harmful to the environment and the human body. In recent years, their use has been prohibited or avoided. Paraffin waxes are poor in water and oil resistance and do not offer satisfactory performance.

To address these problems, for example, Patent Literature 1 describes a coating agent for waterproof and moistureproof corrugated cardboards that is an aqueous dispersion containing a natural hydrocarbon wax, a vegetable sterol, and a low-HLB sucrose fatty acid ester.

Patent Literature 2 describes a coating agent for water- and oil-resistant paper that is a composition obtained by mixing a low-HLB sucrose fatty acid ester to an aqueous polyvinyl alcohol solution.

### Citation List

### Patent Literature

PTL 1: JP5-302065A
PTL 2: JP2020-500222A

### Summary of Invention

### Technical Problem

The aqueous dispersion described in Patent Literature 1 does not offer sufficient water resistance when used as a coating agent, and requires further enhancements in water resistance.

Patent Literature 2 does not describe properties of the dispersion that is obtained. The present inventors studied the coating agents of Patent Literature 2 and have found that the products that are obtained are extremely viscous slurries with poor dispersion stability and are hardly applicable to industry.

An object of the present invention is to provide an aqueous dispersion of a high concentration of a nonionic surfactant that excels in productivity, storage stability, and workability and can impart sufficient water and oil resistance to a substrate when used as a coating agent. Solution to Problem

The present inventors have found that an aqueous dispersion of a nonionic surfactant (A), an anionic surfactant (B), and a wax (C) in water can contain the nonionic surfactant (A) in an increased amount when the wax (C) has a specific structure, and the resultant high-concentration aqueous nonionic surfactant dispersion excels in productivity, storage stability, and workability and can impart sufficient water and oil resistance to a substrate when used as a coating agent.

The gist of the present invention is as follows.
[1] An aqueous dispersion comprising a nonionic surfactant (A), an anionic surfactant (B), and a wax (C) dispersed in water, wherein
   the wax (C) comprises an ester compound having a fatty acid-derived structural moiety and an aliphatic alcohol-derived structural moiety, and
   the content of the nonionic surfactant (A) is 40 to 99 parts by mass based on 100 parts by mass of the total of the nonionic surfactant (A), the anionic surfactant (B), and the wax (C), and is 5 to 50 parts by mass based on 100 parts by mass of the total of the nonionic surfactant (A), the anionic surfactant (B), the wax (C), and the water.
[2] The aqueous dispersion according to [1], which has a solid concentration of 50 mass% or less.
[3] The aqueous dispersion according to [1] or [2], which does not contain inorganic particles or contains 2 mass% or less of inorganic particles.
[4] The aqueous dispersion according to any one of [1] to [3], which is a coating agent for packaging materials.
[5] The aqueous dispersion according to any one of [1] to [4], wherein the nonionic surfactant (A) is at least one surfactant selected from polyol fatty acid esters, polyoxyethylene alkyl ethers, and polyoxyethylene alkylamines.
[6] The aqueous dispersion according to [5], wherein the polyol fatty acid esters are sucrose fatty acid esters and/or sorbitan fatty acid esters.
[7] The aqueous dispersion according to [6], wherein the polyol fatty acid esters are sucrose fatty acid esters.
[8] The aqueous dispersion according to any one of [1] to [7], wherein the anionic surfactant (B) is a fatty acid metal salt.
[9] The aqueous dispersion according to any one of [1] to [8], wherein the wax (C) is a C30-70 ester compound.
[10] The aqueous dispersion according to any one of [1] to [9], further comprising an antifoaming agent (E).
[11] The aqueous dispersion according to [10], wherein the antifoaming agent (E) is at least one antifoaming agent selected from silicone antifoaming agents, polyether antifoaming agents, olefin antifoaming agents, and alcohol antifoaming agents.
[12] The aqueous dispersion according to any one of [1] to [11], wherein the average emulsion particle size in the aqueous dispersion measured by a laser diffraction scattering method is less than 100 µm.
[13] A paper product obtained by coating or impregnating a paper substrate with the aqueous dispersion described in any one of [1] to [12].
[14] A paper product obtained from a pulp slurry containing the aqueous dispersion described in any one of [1] to [12].
[15] A film comprising a nonionic surfactant (A), an anionic surfactant (B), and a wax (C), wherein
   the wax (C) comprises an ester compound having a fatty acid-derived structural moiety and an aliphatic alcohol-derived structural moiety, and
   the content of the nonionic surfactant (A) is 40 to 99 parts by mass based on 100 parts by mass of the total of the nonionic surfactant (A), the anionic surfactant (B), and the wax (C).
[16] The film according to [15], which does not contain inorganic particles or contains 2 mass% or less of inorganic particles.
[17] The film according to [15] or [16], wherein the nonionic surfactant (A) is at least one surfactant selected from polyol fatty acid esters, polyoxyethylene alkyl ethers, and polyoxyethylene alkylamines.
[18] The film according to [17], wherein the polyol fatty acid esters are sucrose fatty acid esters and/or sorbitan fatty acid esters.
[19] The film according to [18], wherein the polyol fatty acid esters are sucrose fatty acid esters.
[20] The film according to any one of [15] to [19], which has a thickness of 0.1 to 30 µm.
[21] A packaging material having the film described in any one of [15] to [20].
[22] A food packaging material having the film described in any one of [15] to [20].
[23] A multilayer structure comprising a substrate comprising at least any of paper, plastic, and wood, and the film described in any one of [15] to [20].

### Advantageous Effects of Invention

The aqueous dispersion of the present invention excels in productivity, storage stability, and workability even when the concentration of the nonionic surfactant in the aqueous dispersion is high, and can impart sufficient water and oil resistance to a substrate when used as a coating agent.

### Description of Embodiments

The present invention will be described in detail below.

### [Aqueous dispersions]

An aqueous nonionic surfactant dispersion of the present invention is a composition containing a nonionic surfactant (A), an anionic surfactant (B), a wax (C), and water (D). The wax (C) includes an ester compound having a fatty acid-derived structural moiety and an aliphatic alcohol-derived structural moiety. The content of a sucrose fatty acid ester (A) is 40 to 99 parts by mass based on 100 parts by mass of the total of the components (A) to (C) and is 5 to 50 parts by mass based on 100 parts by mass of the total of the components (A) to (D).

Specifically, the aqueous dispersion of the present invention is an aqueous dispersion including a nonionic surfactant (A), an anionic surfactant (B), and a wax (C) dispersed in water (hereinafter, also written as the "water (D)") and is characterized in that the wax (C) includes an ester compound having a fatty acid-derived structural moiety and an aliphatic alcohol-derived structural moiety, and the content of the nonionic surfactant (A) is 40 to 99 parts by mass based on 100 parts by mass of the total of the nonionic surfactant (A), the anionic surfactant (B), and the wax (C) (hereinafter, also written as the "total of (A) to (C)") and is 5 to 50 parts by mass based on 100 parts by mass of the total of the nonionic surfactant (A), the anionic surfactant (B), the wax (C), and the water (hereinafter, also written as the "total of (A) to (D)") .

### [Nonionic surfactants (A)]

The nonionic surfactant (A) used in the present invention may be a known nonionic surfactant. The nonionic surfactant (A) is preferably at least one surfactant selected from polyol fatty acid esters, polyoxyethylene alkyl ethers, and polyoxyethylene alkylamines because these surfactants have so high safety that they are often used as food additives. Polyol fatty acid esters are more preferable, sucrose fatty acid esters and/or sorbitan fatty acid esters are particularly preferable, and sucrose fatty acid esters are most preferable.

To expand the range of the industrial use of the aqueous dispersion according to the present invention, the nonionic surfactant (A) is preferably solid at 0°C and above. That is, the nonionic surfactant (A) is preferably a nonionic surfactant that is solid at 0°C and above, and is more preferably at least one surfactant selected from polyol fatty acid esters, polyoxyethylene alkyl ethers, and polyoxyethylene alkylamines that are each solid at 0°C and above. Polyol fatty acid esters that are solid at 0°C and above are still more preferable. Sucrose fatty acid esters and/or sorbitan fatty acid esters that are each solid at 0°C and above are particularly preferable. Sucrose fatty acid esters that are solid at 0°C and above are most preferable.

The sucrose fatty acid esters used in the present invention may be known general sucrose fatty acid esters. At least one of the eight hydroxyl groups of sucrose forms an ester structure with a fatty acid.

For example, a sucrose fatty acid ester may be used in which the fatty acid-derived structural moiety is a structural moiety derived from a C10-30 (preferably C12-28, more preferably C12-22) saturated or unsaturated fatty acid, specifically, a structural moiety derived from lauric acid, myristic acid, palmitic acid, oleic acid, stearic acid, or erucic acid. Depending on the purpose of use of the sucrose fatty acid ester, selection may be made from those having fatty acid-derived structural moieties derived from a single kind of fatty acid and those having fatty acid-derived structural moieties derived from a combination of two or more kinds of fatty acids in an appropriate ratio.

Examples of the above-mentioned sucrose fatty acid ester include "Ryoto Sugar Ester S-370", "Ryoto Sugar Ester S-570", "Ryoto Sugar Ester S-970", "Ryoto Sugar Ester S-1170", "Ryoto Sugar Ester S-1570", "Ryoto Sugar Ester S-1670", "Ryoto Sugar Ester P-170", "Ryoto Sugar Ester P-1670", "Ryoto Sugar Ester M-1695", "Ryoto Sugar Ester O-170", "Ryoto Sugar Ester O-1570", "Ryoto Sugar Ester L-195", "Ryoto Sugar Ester L-595", "Ryoto Sugar Ester L-1695", "Ryoto Sugar Ester B-370", "Ryoto Sugar Ester ER-190" and "Ryoto Sugar Ester POS-135" (manufactured by Mitsubishi Chemical Corporation), "DK Ester F-160", "DK Ester F-140", "DK Ester F-110", "DK Ester F-70" and "DK Ester F-50" (manufactured by Dai-ichi Kogyo Seiyaku Co., Ltd.), and the like.

Among those described above, sucrose fatty acid esters that are solid at 0°C and above are preferable because the use of such esters increases the range of the industrial use of the aqueous dispersion according to the present invention.

The sucrose fatty acid esters may be used singly, or two or more may be used in combination.

The sorbitan fatty acid esters used in the present invention may be known general sorbitan fatty acid esters. At least one of the four hydroxyl groups of sorbitan forms an ester structure with a fatty acid.

For example, a sorbitan fatty acid ester may be used in which the fatty acid-derived structural moiety is a structural moiety derived from a C10-30 (preferably C12-28, more preferably C12-22) saturated or unsaturated fatty acid, specifically, a structural moiety derived from lauric acid, myristic acid, palmitic acid, oleic acid, stearic acid, or erucic acid. Depending on the purpose of use of the sorbitan fatty acid ester, selection may be made from those having fatty acid-derived structural moieties derived from a single kind of fatty acid and those having fatty acid-derived structural moieties derived from a combination of two or more kinds of fatty acids in an appropriate ratio.

Examples of the above-mentioned sorbitan fatty acid ester include "Rheodol SP-L10", "Rheodol SP-P10", "Rheodol SP-S10V", "Rheodol SP-S20", "Rheodol SP-S30V", "Rheodol SP-O10V", "Reodore SP-O30V", "Reodore SP-L10", "Reodore AS-10V", "Reodore AO-10V", "Reodore AS-15V", "Emazol L-10V", "Emazol P-10V ", "Emazol S-10V", "Emazol O-10V", "Emazol L-120V", "Emazol O-120V", "Emazol S-120V", "Reodore TW-L120", "Reodore TW-L106" , "Reodore TW-P120", "Reodore TW-S120V", "Reodore TW-S106V", "Reodore TW-S320V", "Reodore TW-O120V", "Reodore TW-O106V", "Reodore TW-O320V", "Leodore TW-IS399C", and "Leodore Super TW-L120" (manufactured by Kao Corporation), "Rikemal L-250A", "Rikemal S-300W", "Rikemal OV-250", "Rikemal OR-85" , "Rikemal B-150", "Poem S-60V", "Poem S-65V", "Poem O-80V", and "Poem C-250" (manufactured by Riken Vitamin Co., Ltd.), "Sorbon S-10E" , "Sorbon S-20", "Sorbon S-40", "Sorbon S-60", "Sorbon S-80", and "Sorbon S-85" (manufactured by Toho Chemical Industry Co., Ltd.), "Nonion CP-08R", "Nonion LP-20R", "Nonion PP-40R pellets", "Nonion SP-60R pellets", "Nonion OP-80R", "Nonion OP-83RAT", and "Nonion OP-85R" (manufactured by NOF Corporation), and the like.

Among those described above, sorbitan fatty acid esters that are solid at 0°C and above are preferable because the use of such esters increases the range of the industrial use of the aqueous dispersion according to the present invention.

The sorbitan fatty acid esters may be used singly, or two or more may be used in combination.

The nonionic surfactants (A) may be used singly, or two or more may be used in combination.

### [Anionic surfactants (B)]

The anionic surfactant (B) may be a known general anionic surfactant. Examples thereof include fatty acid metal salts, sulfonic acid metal salts, sulfuric acid ester salts, and phosphoric acid metal salts.

Among those described above, fatty acid metal salts are preferable because they offer high dispersion stability of the nonionic surfactant (A) in water and can easily reduce the viscosity of the aqueous dispersion.

The fatty acid metal salt tends to produce viscosity lowering effects more efficiently with increasing number of carbon atoms and tends to be available more easily with decreasing number of carbon atoms in the metal salt. Thus, the number of carbon atoms is preferably 6 to 30, and more preferably 10 to 28.

The fatty acid is preferably a chain fatty acid. The chain fatty acid may be a linear fatty acid or a branched fatty acid. Furthermore, the fatty acid may have a hydroxyl group.

The metal salts are preferably alkali metal salts, with sodium salts and potassium salts being particularly preferable.

Examples of the above-mentioned fatty acid metal salt include sodium melissate, sodium montanate, sodium cerotate, sodium lignocerate, sodium behenate, sodium arachidate, sodium arachidonate, sodium stearate, potassium stearate, sodium oleate, sodium 12-hydroxystearate, sodium palmitate, sodium myristate, sodium laurate, sodium caprate, sodium octoate, sodium hexanoate, and the like.

Among these fatty acid metal salts, sodium montanate, sodium behenate, sodium stearate, sodium 12-hydroxystearate, sodium oleate, and sodium laurate are preferred because they are easily effective.

The anionic surfactants (B) may be used singly, or two or more may be combined in an appropriate ratio.

### [Waxes (C)]

The wax (C) is usually solid and becomes liquid when heated. When the melting point of the wax (C) is high, the coating film tends not to be sticky. When the melting point is low, the wax (C) tends to have excellent dispersibility in water. Thus, the melting point of the wax (C) is usually 0 to 200°C, preferably 20 to 150°C, and more preferably 30 to 100°C.

Examples of the waxes (C) include hydrocarbon waxes, such as solid paraffins, microcrystalline waxes, ceresin waxes, polyethylene waxes, and polypropylene waxes, hydrogenated oils, such as hydrogenated castor oil and hydrogenated jojoba oil, natural waxes, such as carnauba wax, rice bran wax, beeswax, montan wax, and candelilla wax, and others, such as fatty acid esters and fatty acid amides.

In order to satisfy water and oil resistance of the coating and dispersibility in water at the same time, the weight average molecular weight of the hydrocarbon waxes is usually 50,000 or less, preferably 45,000 or less, and the number of carbon atoms in other waxes (C) is usually 14 to 80, preferably 16 to 76.

Among those described above, preferred waxes are natural waxes and ester compounds having a fatty acid-derived structural moiety and an aliphatic alcohol-derived structural moiety because the aqueous dispersion is highly stable and excels in water and oil resistance when used as a coating agent.

The aqueous dispersion tends to form a highly water- and oil-resistant coating on a substrate when the numbers of carbon atoms in the fatty acid-derived structural moiety and the aliphatic alcohol-derived structural moiety are large. The wax tends to exhibit excellent dispersibility in water when the numbers of carbon atoms are small. Thus, the numbers of carbon atoms in the fatty acid-derived structural moiety and the aliphatic alcohol-derived structural moiety are each usually 10 or more, preferably 12 or more, more preferably 14 or more, still more preferably 16 or more, and particularly preferably 18 or more, and are each usually 40 or less, preferably 38 or less, more preferably 36 or less, and particularly preferably 34 or less.

Specifically, the number of carbon atoms in the fatty acid-derived structural moiety is usually 10 to 40, preferably 12 to 38, more preferably 14 to 36, particularly preferably 16 to 34, and further preferably 18 to 34.

Examples of the above-mentioned fatty acid include lauric acid, myristic acid, pentadecyl acid, palmitic acid, palmitoleic acid, margaric acid, stearic acid, oleic acid, vaccenic acid, linoleic acid, linolenic acid, eleostearic acid, arachidic acid, eicosaedic acid, mead acid, arachidonic acid, behenic acid, tricosylic acid, lignoceric acid, nervonic acid, pentacosanoic acid, cerotic acid, heptacosanoic acid, montanic acid, nonacosanoic acid, melissic acid, hentriacontanoic acid, dotriacontanoic acid, tritriacontane acid, tetratriacontanoic acid, pentatriacontanoic acid, hexatriacontanoic acid, heptatriacontanoic acid, octatriacontanoic acid, nonatriacontanoic acid, tetracontanoic acid, and the like.

The number of carbon atoms in the aliphatic alcohol-derived structural moiety is usually 12 to 40, preferably 14 to 38, more preferably 16 to 36, and particularly preferably 18 to 34.

Examples of the above-mentioned aliphatic alcohol include lauryl alcohol, tridecyl alcohol, myristyl alcohol, pentadecyl alcohol, 1-hexadecanol, palmitole alcohol, 1-heptadecanol, stearyl alcohol, isostearyl alcohol, elaidyl alcohol, oleyl alcohol, linoleyl alcohol, elidolinoleyl alcohol, ricinoleyl alcohol, nonadecyl alcohol, arachidyl alcohol, heneicosanol, behenyl alcohol, erucyl alcohol, lignoseryl alcohol, seryl alcohol, 1-heptacosanol, montanyl alcohol, 1-nonacosanol, myricyl alcohol, 1-dotriacontanol, 1-tetratriacontanol, and the like.

Among these, preferred are stearyl alcohol, nonadecyl alcohol, arachidyl alcohol, heneicosanol, behenyl alcohol, lignoceryl alcohol, seryl alcohol, 1-heptacosanol, montanyl alcohol, 1-nonacosanol, myricyl alcohol, 1-dotriacontanol and 1-tetratriacontanol.

The ester compounds having a fatty acid-derived structural moiety and an aliphatic alcohol-derived structural moiety are reaction products of the fatty acid described above and the aliphatic alcohol described above.

Examples of the ester compounds having a fatty acid-derived structural moiety and an aliphatic alcohol-derived structural moiety include the following.

Ester compounds having a structural part of lauric acid such as lauryl laurate, tridecyl laurate, myristyl laurate, pentadecyl laurate, hexadecan-1-yl laurate, palmitrail laurate, heptadecan-1-yl laurate, stearyl laurate, isostearyl laurate, elaidyl laurate, oleyl laurate, linoleyl laurate, elidelinoleyl laurate, ricinoleyl laurate, nonadecyl laurate, arachidyl laurate, heneicosane laurate, behenyl laurate, erucyl laurate, lignoceryl laurate, seryl laurate, heptacosan-1-yl laurate, montanyl laurate, nonacosan-1-yl laurate, myricyl laurate, dotriacontan-1-yl laurate, tetratriacontan-1-yl laurate, and the like.

Ester compounds having a structural part of myristic acid such as lauryl myristate, tridecyl myristate, myristyl myristate, pentadecyl myristate, hexadecan-1-yl myristate, palmitrail myristate, heptadecan-1-yl myristate, stearyl myristate, isostearyl myristate, elaidyl myristate, oleyl myristate, linoleyl myristate, elidelinoleyl myristate, ricinoleyl myristate, nonadecyl myristate, arachidyl myristate, heneicosane myristate, behenyl myristate, erucyl myristate, lignoceryl myristate, seryl myristate, heptacosan-1-yl myristate, montanyl myristate, nonacosan-1-yl myristate, myricyl myristate, dotriacontan-1-yl myristate, tetratriacontan-1-yl myristate, and the like.

Ester compounds having a structural part of pentadecyl acid such as lauryl pentadecylate, tridecyl pentadecylate, myristyl pentadecylate, pentadecyl pentadecylate, hexadecan-1-yl pentadecylate, palmitrail pentadecylate, heptadecan-1-yl pentadecylate, stearyl pentadecylate, isostearyl pentadecylate, elaidyl pentadecylate, oleyl pentadecylate, linoleyl pentadecylate, elidelinoleyl pentadecylate, ricinoleyl pentadecylate, nonadecyl pentadecylate, arachidyl pentadecylate, heneicosane pentadecylate, behenyl pentadecylate, erucyl pentadecylate, lignoceryl pentadecylate, seryl pentadecylate, heptacosan-1-yl pentadecylate, montanyl pentadecylate, nonacosan-1-yl pentadecylate, myricyl pentadecylate, dotriacontan-1-yl pentadecylate, tetratriacontan-1-yl pentadecylate, and the like.

Ester compounds having a structural part of palmitic acid such as lauryl palmitate, tridecyl palmitate, myristyl palmitate, pentadecyl palmitate, hexadecan-1-yl palmitate, palmitrail palmitate, heptadecan-1-yl palmitate, stearyl palmitate, isostearyl palmitate, elaidyl palmitate, oleyl palmitate, linoleyl palmitate, elidelinoleyl palmitate, ricinoleyl palmitate, nonadecyl palmitate, arachidyl palmitate, heneicosane palmitate, behenyl palmitate, erucyl palmitate, lignoceryl palmitate, seryl palmitate, heptacosan-1-yl palmitate, montanyl palmitate, nonacosan-1-yl palmitate, myricyl palmitate, dotriacontan-1-yl palmitate, tetratriacontan-1-yl palmitate, and the like.

Ester compounds having a structural part of palmitoleic acid such as lauryl palmitoleate, tridecyl palmitoleate, myristyl palmitoleate, pentadecyl palmitoleate, hexadecan-1-yl palmitoleate, palmitrail palmitoleate, heptadecan-1-yl palmitoleate, stearyl palmitoleate, isostearyl palmitoleate, elaidyl palmitoleate, oleyl palmitoleate, linoleyl palmitoleate, elidelinoleyl palmitoleate, ricinoleyl palmitoleate, nonadecyl palmitoleate, arachidyl palmitoleate, heneicosane palmitoleate, behenyl palmitoleate, erucyl palmitoleate, lignoceryl palmitoleate, seryl palmitoleate, heptacosan-1-yl palmitoleate, montanyl palmitoleate, nonacosan-1-yl palmitoleate, myricyl palmitoleate, dotriacontan-1-yl palmitoleate, tetratriacontan-1-yl palmitoleate, and the like.

Ester compounds having a structural part of margaric acid such as lauryl margarate, tridecyl margarate, myristyl margarate, pentadecyl margarate, hexadecan-1-yl margarate, palmitrail margarate, heptadecan-1-yl margarate, stearyl margarate, isostearyl margarate, elaidyl margarate, oleyl margarate, linoleyl margarate, elidelinoleyl margarate, ricinoleyl margarate, nonadecyl margarate, arachidyl margarate, heneicosane margarate, behenyl margarate, erucyl margarate, lignoceryl margarate, seryl margarate, heptacosan-1-yl margarate, montanyl margarate, nonacosan-1-yl margarate, myricyl margarate, dotriacontan-1-yl margarate, tetratriacontan-1-yl margarate, and the like.

Ester compounds having a structural part of stearic acid such as lauryl stearate, tridecyl stearate, myristyl stearate, pentadecyl stearate, hexadecan-1-yl stearate, palmitrail stearate, heptadecan-1-yl stearate, stearyl stearate, isostearyl stearate, elaidyl stearate, oleyl stearate, linoleyl stearate, elidelinoleyl stearate, ricinoleyl stearate, nonadecyl stearate, arachidyl stearate, heneicosane stearate, behenyl stearate, erucyl stearate, lignoceryl stearate, seryl stearate, heptacosan-1-yl stearate, montanyl stearate, nonacosan-1-yl stearate, myricyl stearate, dotriacontan-1-yl stearate, tetratriacontan-1-yl stearate, and the like.

Ester compounds having a structural part of oleic acid such as lauryl oleate, tridecyl oleate, myristyl oleate, pentadecyl oleate, hexadecan-1-yl oleate, palmitrail oleate, heptadecan-1-yl oleate, stearyl oleate, isostearyl oleate, elaidyl oleate, oleyl oleate, linoleyl oleate, elidelinoleyl oleate, ricinoleyl oleate, nonadecyl oleate, arachidyl oleate, heneicosane oleate, behenyl oleate, erucyl oleate, lignoceryl oleate, seryl oleate, heptacosan-1-yl oleate, montanyl oleate, nonacosan-1-yl oleate, myricyl oleate, dotriacontan-1-yl oleate, tetratriacontan-1-yl oleate, and the like.

Ester compounds having a structural part of vaccenic acid such as lauryl vaccenate, tridecyl vaccenate, myristyl vaccenate, pentadecyl vaccenate, hexadecan-1-yl vaccenate, palmitrail vaccenate, heptadecan-1-yl vaccenate, stearyl vaccenate, isostearyl vaccenate, elaidyl vaccenate, oleyl vaccenate, linoleyl vaccenate, elidelinoleyl vaccenate, ricinoleyl vaccenate, nonadecyl vaccenate, arachidyl vaccenate, heneicosane vaccenate, behenyl vaccenate, erucyl vaccenate, lignoceryl vaccenate, seryl vaccenate, heptacosan-1-yl vaccenate, montanyl vaccenate, nonacosan-1-yl vaccenate, myricyl vaccenate, dotriacontan-1-yl vaccenate, tetratriacontan-1-yl vaccenate, and the like.

Ester compounds having a structural part of linoleic acid such as lauryl linoleate, tridecyl linoleate, myristyl linoleate, pentadecyl linoleate, hexadecan-1-yl linoleate, palmitrail linoleate, heptadecan-1-yl linoleate, stearyl linoleate, isostearyl linoleate, elaidyl linoleate, oleyl linoleate, linoleyl linoleate, elidelinoleyl linoleate, ricinoleyl linoleate, nonadecyl linoleate, arachidyl linoleate, heneicosane linoleate, behenyl linoleate, erucyl linoleate, lignoceryl linoleate, seryl linoleate, heptacosan-1-yl linoleate, montanyl linoleate, nonacosan-1-yl linoleate, myricyl linoleate, dotriacontan-1-yl linoleate, tetratriacontan-1-yl linoleate, and the like.

Ester compounds having a structural part of linolenic acid such as lauryl linolenate, tridecyl linolenate, myristyl linolenate, pentadecyl linolenate, hexadecan-1-yl linolenate, palmitrail linolenate, heptadecan-1-yl linolenate, stearyl linolenate, isostearyl linolenate, elaidyl linolenate, oleyl linolenate, linoleyl linolenate, elidelinoleyl linolenate, ricinoleyl linolenate, nonadecyl linolenate, arachidyl linolenate, heneicosane linolenate, behenyl linolenate, erucyl linolenate, lignoceryl linolenate, seryl linolenate, heptacosan-1-yl linolenate, montanyl linolenate, nonacosan-1-yl linolenate, myricyl linolenate, dotriacontan-1-yl linolenate, tetratriacontan-1-yl linolenate, and the like.

Ester compounds having a structural part of eleostearic acid such as lauryl eleostearate, tridecyl eleostearate, myristyl eleostearate, pentadecyl eleostearate, hexadecan-1-yl eleostearate, palmitolely eleostearate, heptadecan-1-yl eleostearate, stearyl eleostearate, isostearyl eleostearate, elaidyl eleostearate, oleyl eleostearate, linoleyl eleostearate, elidelinoleyl eleostearate, ricinoleyl eleostearate, nonadecyl eleostearate, arachidyl eleostearate, heneicosane eleostearate, behenyl eleostearate, erucyl eleostearate, lignoceryl eleostearate, seryl eleostearate, heptacosan-1-yl eleostearate, montanyl eleostearate, nonacosan-1-yl eleostearate, myricyl eleostearate, dotriacontan-1-yl eleostearate, tetratriacontan-1-yl eleostearate, and the like.

Ester compounds having a structural part of arachidic acid such as lauryl arachidate, tridecyl arachidate, myristyl arachidate, pentadecyl arachidate, hexadecan-1-yl arachidate, palmitrail arachidate, heptadecan-1-yl arachidate, stearyl arachidate, isostearyl arachidate, elaidyl arachidate, oleyl arachidate, linoleyl arachidate, elidelinoleyl arachidate, ricinoleyl arachidate, nonadecyl arachidate, arachidyl arachidate, heneicosane arachidate, behenyl arachidate, erucyl arachidate, lignoceryl arachidate, seryl arachidate, heptacosan-1-yl arachidate, montanyl arachidate, nonacosan-1-yl arachidate, myricyl arachidate, dotriacontan-1-yl arachidate, tetratriacontan-1-yl arachidate, and the like.

Ester compounds having a structural part of eicosaedic acid such as lauryl eicosaedate, tridecyl eicosaedate, myristyl eicosaedate, pentadecyl eicosaedate, hexadecan-1-yl eicosaedate, palmitrail eicosaedate, heptadecan-1-yl eicosaedate, stearyl eicosaedate, isostearyl eicosaedate, elaidyl eicosaedate, oleyl eicosaedate, linoleyl eicosaedate, elidelinoleyl eicosaedate, ricinoleyl eicosaedate, nonadecyl eicosaedate, arachidyl eicosaedate, heneicosane eicosaedate, behenyl eicosaedate, erucyl eicosaedate, lignoceryl eicosaedate, seryl eicosaedate, heptacosan-1-yl eicosaedate, montanyl eicosaedate, nonacosan-1-yl eicosaedate, myricyl eicosaedate, dotriacontan-1-yl eicosaedate, tetratriacontan-1-yl eicosaedate, and the like.

Ester compounds having a structural part of mead acid such as lauryl mead acid, tridecyl mead acid, myristyl mead acid, pentadecyl mead acid, hexadecan-1-yl mead acid, palmitrail mead acid, heptadecan-1-yl mead acid, stearyl mead acid, isostearyl mead acid, elaidyl mead acid, oleyl mead acid, linoleyl mead acid, elidelinoleyl mead acid, ricinoleyl mead acid, nonadecyl mead acid, arachidyl mead acid, heneicosane mead acid, behenyl mead acid, erucyl mead acid, lignoceryl mead acid, seryl mead acid, heptacosan-1-yl mead acid, montanyl mead acid, nonacosan-1-yl mead acid, myricyl mead acid, dotriacontan-1-yl mead acid, tetratriacontan-1-yl mead acid, and the like.

Ester compounds having a structural part of arachidonic acid such as lauryl arachidonate, tridecyl arachidonate, myristyl arachidonate, pentadecyl arachidonate, hexadecan-1-yl arachidonate, palmitrail arachidonate, heptadecan-1-yl arachidonate, stearyl arachidonate, isostearyl arachidonate, elaidyl arachidonate, oleyl arachidonate, linoleyl arachidonate, elidelinoleyl arachidonate, ricinoleyl arachidonate, nonadecyl arachidonate, arachidyl arachidonate, heneicosane arachidonate, behenyl arachidonate, erucyl arachidonate, lignoceryl arachidonate, seryl arachidonate, heptacosan-1-yl arachidonate, montanyl arachidonate, nonacosan-1-yl arachidonate, myricyl arachidonate, dotriacontan-1-yl arachidonate, tetratriacontan-1-yl arachidonate, and the like.

Ester compounds having a structural part of behenic acid such as lauryl behenate, tridecyl behenate, myristyl behenate, pentadecyl behenate, hexadecan-1-yl behenate, palmitrail behenate, heptadecan-1-yl behenate, stearyl behenate, isostearyl behenate, elaidyl behenate, oleyl behenate, linoleyl behenate, elidelinoleyl behenate, ricinoleyl behenate, nonadecyl behenate, arachidyl behenate, heneicosane behenate, behenyl behenate, erucyl behenate, lignoceryl behenate, seryl behenate, heptacosan-1-yl behenate, montanyl behenate, nonacosan-1-yl behenate, myricyl behenate, dotriacontan-1-yl behenate, tetratriacontan-1-yl behenate, and the like.

Ester compounds having a structural part of tricosylic acid such as lauryl tricosylate, tridecyl tricosylate, myristyl tricosylate, pentadecyl tricosylate, hexadecan-1-yl tricosylate, palmitrail tricosylate, heptadecan-1-yl tricosylate, stearyl tricosylate, isostearyl tricosylate, elaidyl tricosylate, oleyl tricosylate, linoleyl tricosylate, elidelinoleyl tricosylate, ricinoleyl tricosylate, nonadecyl tricosylate, arachidyl tricosylate, heneicosane tricosylate, behenyl tricosylate, erucyl tricosylate, lignoceryl tricosylate, seryl tricosylate, heptacosan-1-yl tricosylate, montanyl tricosylate, nonacosan-1-yl tricosylate, myricyl tricosylate, dotriacontan-1-yl tricosylate, tetratriacontan-1-yl tricosylate, and the like.

Ester compounds having a structural part of lignoceric acid such as lauryl lignocerate, tridecyl lignocerate, myristyl lignocerate, pentadecyl lignocerate, hexadecan-1-yl lignocerate, palmitrail lignocerate, heptadecan-1-yl lignocerate, stearyl lignocerate, isostearyl lignocerate, elaidyl lignocerate, oleyl lignocerate, linoleyl lignocerate, elidelinoleyl lignocerate, ricinoleyl lignocerate, nonadecyl lignocerate, arachidyl lignocerate, heneicosane lignocerate, behenyl lignocerate, erucyl lignocerate, lignoceryl lignocerate, seryl lignocerate, heptacosan-1-yl lignocerate, montanyl lignocerate, nonacosan-1-yl lignocerate, myricyl lignocerate, dotriacontan-1-yl lignocerate, tetratriacontan-1-yl lignocerate, and the like.

Ester compounds having a structural part of nervonic acid such as lauryl nervonate, tridecyl nervonate, myristyl nervonate, pentadecyl nervonate, hexadecan-1-yl nervonate, palmitrail nervonate, heptadecan-1-yl nervonate, stearyl nervonate, isostearyl nervonate, elaidyl nervonate, oleyl nervonate, linoleyl nervonate, elidelinoleyl nervonate, ricinoleyl nervonate, nonadecyl nervonate, arachidyl nervonate, heneicosane nervonate, behenyl nervonate, erucyl nervonate, lignoceryl nervonate, seryl nervonate, heptacosan-1-yl nervonate, montanyl nervonate, nonacosan-1-yl nervonate, myricyl nervonate, dotriacontan-1-yl nervonate, tetratriacontan-1-yl nervonate, and the like.

Ester compounds having a structural part of pentacosanoic acid such as lauryl pentacosanoate, tridecyl pentacosanoate, myristyl pentacosanoate, pentadecyl pentacosanoate, hexadecan-1-yl pentacosanoate, palmitrail pentacosanoate, heptadecan-1-yl pentacosanoate, stearyl pentacosanoate, isostearyl pentacosanoate, elaidyl pentacosanoate, oleyl pentacosanoate, linoleyl pentacosanoate, elidelinoleyl pentacosanoate, ricinoleyl pentacosanoate, nonadecyl pentacosanoate, arachidyl pentacosanoate, heneicosane pentacosanoate, behenyl pentacosanoate, erucyl pentacosanoate, lignoceryl pentacosanoate, seryl pentacosanoate, heptacosan-1-yl pentacosanoate, montanyl pentacosanoate, nonacosan-1-yl pentacosanoate, myricyl pentacosanoate, dotriacontan-1-yl pentacosanoate, tetratriacontan-1-yl pentacosanoate, and the like.

Ester compounds having a structural part of cerotic acid such as lauryl cerotate, tridecyl cerotate, myristyl cerotate, pentadecyl cerotate, hexadecan-1-yl cerotate, palmitrail cerotate, heptadecan-1-yl cerotate, stearyl cerotate, isostearyl cerotate, elaidyl cerotate, oleyl cerotate, linoleyl cerotate, elidelinoleyl cerotate, ricinoleyl cerotate, nonadecyl cerotate, arachidyl cerotate, heneicosane cerotate, behenyl cerotate, erucyl cerotate, lignoceryl cerotate, seryl cerotate, heptacosan-1-yl cerotate, montanyl cerotate, nonacosan-1-yl cerotate, myricyl cerotate, dotriacontan-1-yl cerotate, tetratriacontan-1-yl cerotate, and the like.

Ester compounds having a structural part of heptacosanoic acid such as lauryl heptacosanoate, tridecyl heptacosanoate, myristyl heptacosanoate, pentadecyl heptacosanoate, hexadecan-1-yl heptacosanoate, palmitrail heptacosanoate, heptadecan-1-yl heptacosanoate, stearyl heptacosanoate, isostearyl heptacosanoate, elaidyl heptacosanoate, oleyl heptacosanoate, linoleyl heptacosanoate, elidelinoleyl heptacosanoate, ricinoleyl heptacosanoate, nonadecyl heptacosanoate, arachidyl heptacosanoate, heneicosane heptacosanoate, behenyl heptacosanoate, erucyl heptacosanoate, lignoceryl heptacosanoate, seryl heptacosanoate, heptacosan-1-yl heptacosanoate, montanyl heptacosanoate, nonacosan-1-yl heptacosanoate, myricyl heptacosanoate, dotriacontan-1-yl heptacosanoate, tetratriacontan-1-yl heptacosanoate, and the like.

Ester compounds having a structural part of montanic acid such as lauryl montanate, tridecyl montanate, myristyl montanate, pentadecyl montanate, hexadecan-1-yl montanate, palmitrail montanate, heptadecan-1-yl montanate, stearyl montanate, isostearyl montanate, elaidyl montanate, oleyl montanate, linoleyl montanate, elidelinoleyl montanate, ricinoleyl montanate, nonadecyl montanate, arachidyl montanate, heneicosane montanate, behenyl montanate, erucyl montanate, lignoceryl montanate, seryl montanate, heptacosan-1-yl montanate, montanyl montanate, nonacosan-1-yl montanate, myricyl montanate, dotriacontan-1-yl montanate, tetratriacontan-1-yl montanate, and the like.

Ester compounds having a structural part of nonacosanoic acid such as lauryl nonacosanoate, tridecyl nonacosanoate, myristyl nonacosanoate, pentadecyl nonacosanoate, hexadecan-1-yl nonacosanoate, palmitrail nonacosanoate, heptadecan-1-yl nonacosanoate, stearyl nonacosanoate, isostearyl nonacosanoate, elaidyl nonacosanoate, oleyl nonacosanoate, linoleyl nonacosanoate, elidelinoleyl nonacosanoate, ricinoleyl nonacosanoate, nonadecyl nonacosanoate, arachidyl nonacosanoate, heneicosane nonacosanoate, behenyl nonacosanoate, erucyl nonacosanoate, lignoceryl nonacosanoate, seryl nonacosanoate, heptacosan-1-yl nonacosanoate, montanyl nonacosanoate, nonacosan-1-yl nonacosanoate, myricyl nonacosanoate, dotriacontan-1-yl nonacosanoate, tetratriacontan-1-yl nonacosanoate, and the like.

Ester compounds having a structural part of melissic acid such as lauryl melissate, tridecyl melissate, myristyl melissate, pentadecyl melissate, hexadecan-1-yl melissate, palmitrail melissate, heptadecan-1-yl melissate, stearyl melissate, isostearyl melissate, elaidyl melissate, oleyl melissate, linoleyl melissate, elidelinoleyl melissate, ricinoleyl melissate, nonadecyl melissate, arachidyl melissate, heneicosane melissate, behenyl melissate, erucyl melissate, lignoceryl melissate, seryl melissate, heptacosan-1-yl melissate, montanyl melissate, nonacosan-1-yl melissate, myricyl melissate, dotriacontan-1-yl melissate, tetratriacontan-1-yl melissate, and the like.

Ester compounds having a structural part of hentriacontanoic acid such as lauryl hentriacontanoate, tridecyl hentriacontanoate, myristyl hentriacontanoate, pentadecyl hentriacontanoate, hexadecan-1-yl hentriacontanoate, palmitrail hentriacontanoate, heptadecan-1-yl hentriacontanoate, stearyl hentriacontanoate, isostearyl hentriacontanoate, elaidyl hentriacontanoate, oleyl hentriacontanoate, linoleyl hentriacontanoate, elidelinoleyl hentriacontanoate, ricinoleyl hentriacontanoate, nonadecyl hentriacontanoate, arachidyl hentriacontanoate, heneicosane hentriacontanoate, behenyl hentriacontanoate, erucyl hentriacontanoate, lignoceryl hentriacontanoate, seryl hentriacontanoate, heptacosan-1-yl hentriacontanoate, montanyl hentriacontanoate, nonacosan-1-yl hentriacontanoate, myricyl hentriacontanoate, dotriacontan-1-yl hentriacontanoate, tetratriacontan-1-yl hentriacontanoate, and the like.

Ester compounds having a structural part of dotriacontanoic acid such as lauryl dotriacontanoate, tridecyl dotriacontanoate, myristyl dotriacontanoate, pentadecyl dotriacontanoate, hexadecan-1-yl dotriacontanoate, palmitrail dotriacontanoate, heptadecan-1-yl dotriacontanoate, stearyl dotriacontanoate, isostearyl dotriacontanoate, elaidyl dotriacontanoate, oleyl dotriacontanoate, linoleyl dotriacontanoate, elidelinoleyl dotriacontanoate, ricinoleyl dotriacontanoate, nonadecyl dotriacontanoate, arachidyl dotriacontanoate, heneicosane dotriacontanoate, behenyl dotriacontanoate, erucyl dotriacontanoate, lignoceryl dotriacontanoate, seryl dotriacontanoate, heptacosan-1-yl dotriacontanoate, montanyl dotriacontanoate, nonacosan-1-yl dotriacontanoate, myricyl dotriacontanoate, dotriacontan-1-yl dotriacontanoate, tetratriacontan-1-yl dotriacontanoate, and the like.

Ester compounds having a structural part of tritriacontanoic acid such as lauryl tritriacontanoate, tridecyl tritriacontanoate, myristyl tritriacontanoate, pentadecyl tritriacontanoate, hexadecan-1-yl tritriacontanoate, palmitrail tritriacontanoate, heptadecan-1-yl tritriacontanoate, stearyl tritriacontanoate, isostearyl tritriacontanoate, elaidyl tritriacontanoate, oleyl tritriacontanoate, linoleyl tritriacontanoate, elidelinoleyl tritriacontanoate, ricinoleyl tritriacontanoate, nonadecyl tritriacontanoate, arachidyl tritriacontanoate, heneicosane tritriacontanoate, behenyl tritriacontanoate, erucyl tritriacontanoate, lignoceryl tritriacontanoate, seryl tritriacontanoate, heptacosan-1-yl tritriacontanoate, montanyl tritriacontanoate, nonacosan-1-yl tritriacontanoate, myricyl tritriacontanoate, dotriacontan-1-yl tritriacontanoate, tetratriacontan-1-yl tritriacontanoate, and the like.

Ester compounds having a structural part of tetratriacontanoic acid such as lauryl tetratriacontanoate, tridecyl tetratriacontanoate, myristyl tetratriacontanoate, pentadecyl tetratriacontanoate, hexadecan-1-yl tetratriacontanoate, palmitrail tetratriacontanoate, heptadecan-1-yl tetratriacontanoate, stearyl tetratriacontanoate, isostearyl tetratriacontanoate, elaidyl tetratriacontanoate, oleyl tetratriacontanoate, linoleyl tetratriacontanoate, elidelinoleyl tetratriacontanoate, ricinoleyl tetratriacontanoate, nonadecyl tetratriacontanoate, arachidyl tetratriacontanoate, heneicosane tetratriacontanoate, behenyl tetratriacontanoate, erucyl tetratriacontanoate, lignoceryl tetratriacontanoate, seryl tetratriacontanoate, heptacosan-1-yl tetratriacontanoate, montanyl tetratriacontanoate, nonacosan-1-yl tetratriacontanoate, myricyl tetratriacontanoate, dotriacontan-1-yl tetratriacontanoate, tetratriacontan-1-yl tetratriacontanoate, and the like. Ester compounds having a structural part of pentatriacontanoic acid such as lauryl pentatriacontanoate, tridecyl pentatriacontanoate, myristyl pentatriacontanoate, pentadecyl pentatriacontanoate, hexadecan-1-yl pentatriacontanoate, palmitrail pentatriacontanoate, heptadecan-1-yl pentatriacontanoate, stearyl pentatriacontanoate, isostearyl pentatriacontanoate, elaidyl pentatriacontanoate, oleyl pentatriacontanoate, linoleyl pentatriacontanoate, elidelinoleyl pentatriacontanoate, ricinoleyl pentatriacontanoate, nonadecyl pentatriacontanoate, arachidyl pentatriacontanoate, heneicosane pentatriacontanoate, behenyl pentatriacontanoate, erucyl pentatriacontanoate, lignoceryl pentatriacontanoate, seryl pentatriacontanoate, heptacosan-1-yl pentatriacontanoate, montanyl pentatriacontanoate, nonacosan-1-yl pentatriacontanoate, myricyl pentatriacontanoate, dotriacontan-1-yl pentatriacontanoate, tetratriacontan-1-yl pentatriacontanoate, and the like.

Ester compounds having a structural part of hexatriacontanoic acid such as lauryl hexatriacontanoate, tridecyl hexatriacontanoate, myristyl hexatriacontanoate, pentadecyl hexatriacontanoate, hexadecan-1-yl hexatriacontanoate, palmitrail hexatriacontanoate, heptadecan-1-yl hexatriacontanoate, stearyl hexatriacontanoate, isostearyl hexatriacontanoate, elaidyl hexatriacontanoate, oleyl hexatriacontanoate, linoleyl hexatriacontanoate, elidelinoleyl hexatriacontanoate, ricinoleyl hexatriacontanoate, nonadecyl hexatriacontanoate, arachidyl hexatriacontanoate, heneicosane hexatriacontanoate, behenyl hexatriacontanoate, erucyl hexatriacontanoate, lignoceryl hexatriacontanoate, seryl hexatriacontanoate, heptacosan-1-yl hexatriacontanoate, montanyl hexatriacontanoate, nonacosan-1-yl hexatriacontanoate, myricyl hexatriacontanoate, dotriacontan-1-yl hexatriacontanoate, tetratriacontan-1-yl hexatriacontanoate, and the like.

Ester compounds having a structural part of heptatriacontanoic acid such as lauryl heptatriacontanoate, tridecyl heptatriacontanoate, myristyl heptatriacontanoate, pentadecyl heptatriacontanoate, hexadecan-1-yl heptatriacontanoate, palmitrail heptatriacontanoate, heptadecan-1-yl heptatriacontanoate, stearyl heptatriacontanoate, isostearyl heptatriacontanoate, elaidyl heptatriacontanoate, oleyl heptatriacontanoate, linoleyl heptatriacontanoate, elidelinoleyl heptatriacontanoate, ricinoleyl heptatriacontanoate, nonadecyl heptatriacontanoate, arachidyl heptatriacontanoate, heneicosane heptatriacontanoate, behenyl heptatriacontanoate, erucyl heptatriacontanoate, lignoceryl heptatriacontanoate, seryl heptatriacontanoate, heptacosan-1-yl heptatriacontanoate, montanyl heptatriacontanoate, nonacosan-1-yl heptatriacontanoate, myricyl heptatriacontanoate, dotriacontan-1-yl heptatriacontanoate, tetratriacontan-1-yl heptatriacontanoate, and the like.

Ester compounds having a structural part of octatriacontanoic acid such as lauryl octatriacontanoate, tridecyl octatriacontanoate, myristyl octatriacontanoate, pentadecyl octatriacontanoate, hexadecan-1-yl octatriacontanoate, palmitrail octatriacontanoate, heptadecan-1-yl octatriacontanoate, stearyl octatriacontanoate, isostearyl octatriacontanoate, elaidyl octatriacontanoate, oleyl octatriacontanoate, linoleyl octatriacontanoate, elidelinoleyl octatriacontanoate, ricinoleyl octatriacontanoate, nonadecyl octatriacontanoate, arachidyl octatriacontanoate, heneicosane octatriacontanoate, behenyl octatriacontanoate, erucyl octatriacontanoate, lignoceryl octatriacontanoate, seryl octatriacontanoate, heptacosan-1-yl octatriacontanoate, montanyl octatriacontanoate, nonacosan-1-yl octatriacontanoate, myricyl octatriacontanoate, dotriacontan-1-yl octatriacontanoate, tetratriacontan-1-yl octatriacontanoate, and the like.

Ester compounds having a structural part of nonatriacontanoic acid such as lauryl nonatriacontanoate, tridecyl nonatriacontanoate, myristyl nonatriacontanoate, pentadecyl nonatriacontanoate, hexadecan-1-yl nonatriacontanoate, palmitrail nonatriacontanoate, heptadecan-1-yl nonatriacontanoate, stearyl nonatriacontanoate, isostearyl nonatriacontanoate, elaidyl nonatriacontanoate, oleyl nonatriacontanoate, linoleyl nonatriacontanoate, elidelinoleyl nonatriacontanoate, ricinoleyl nonatriacontanoate, nonadecyl nonatriacontanoate, arachidyl nonatriacontanoate, heneicosane nonatriacontanoate, behenyl nonatriacontanoate, erucyl nonatriacontanoate, lignoceryl nonatriacontanoate, seryl nonatriacontanoate, heptacosan-1-yl nonatriacontanoate, montanyl nonatriacontanoate, nonacosan-1-yl nonatriacontanoate, myricyl nonatriacontanoate, dotriacontan-1-yl nonatriacontanoate, tetratriacontan-1-yl nonatriacontanoate, and the like.

Ester compounds having a structural part of tetracontanoic acid such as lauryl tetracontanoate, tridecyl tetracontanoate, myristyl tetracontanoate, pentadecyl tetracontanoate, hexadecan-1-yl tetracontanoate, palmitrail tetracontanoate, heptadecan-1-yl tetracontanoate, stearyl tetracontanoate, isostearyl tetracontanoate, elaidyl tetracontanoate, oleyl tetracontanoate, linoleyl tetracontanoate, elidelinoleyl tetracontanoate, ricinoleyl tetracontanoate, nonadecyl tetracontanoate, arachidyl tetracontanoate, heneicosane tetracontanoate, behenyl tetracontanoate, erucyl tetracontanoate, lignoceryl tetracontanoate, seryl tetracontanoate, heptacosan-1-yl tetracontanoate, montanyl tetracontanoate, nonacosan-1-yl tetracontanoate, myricyl tetracontanoate, dotriacontan-1-yl tetracontanoate, tetratriacontan-1-yl tetracontanoate, and the like.

Among these, from the viewpoint of the stability of the aqueous dispersion and the excellent water and oil resistance to a substrate when used as a coating agent, ester compounds having a structural part of saturated fatty acid such as palmitic acid, stearic acid, arachidic acid, behenic acid, tricosylic acid, lignoceric acid, pentacosanoic acid, cerotic acid, heptacosanoic acid, montanic acid, nonacosanoic acid, melissic acid, hentriacontanoic acid, dotriacontanoic acid, and tritriacontanoic acid are preferred.

In particular, saturated fatty acid ester compounds such as montanyl palmitate, myricyl palmitate, dotriacontan-1-yl palmitate, tetratriacontan-1-yl palmitate, stearyl stearate, montanyl stearate, myricyl stearate, dotriacontan-1-yl, stearate, tetratriacontan-1-yl stearate, montanyl arachidate, myricyl arachidate, dotriacontan-1-yl arachidate, tetratriacontan-1-yl arachidate, behenyl behenate, lignoceryl behenate, seryl behenate, montanyl behenate, myricyl behenate, dotriacontan-1-yl behenate, tetratriacontan-1-yl behenate, montanyl tricosylate, myricyl tricosylate, dotriacontan-1-yl tricosylate, tetratriacontan-1-yl tricosylate, lignoceryl lignocerate, seryl lignocerate, montanyl lignoserate, myricyl lignocerate, dotriacontan-1-yl lignoserate, tetratriacontan-1-yl lignoserate, montanyl pentacosanoate, myricyl pentacosanoate, dotriacontan-1-yl pentacosanoate, tetratriacontan-1-yl pentacosanoate, montanyl cerotate, myricyl cerotate, dotriacontan-1-yl cerotate, tetratriacontan-1-yl cerotate , montanyl heptacosanoate, myricyl heptacosanoate, dotriacontan-1-yl heptacosanoate, tetratriacontan-1-yl heptacosanoate, montanyl montanate, myricyl montanate, dotriacontan-1-yl montanate, tetracontan-1-yl montanate, montanyl nonacosanoate, myricyl nonacosanoate, dotriacontan-1-yl nonacosanoate, tetratriacontan-1-yl nonacosanoate, montanyl melissate, myricyl melissate, dotriacontan-1-yl melissate, tetratriacontan-1-yl melissate, montanyl hentriacontanoate, myricyl hentriacontanoate, dotriacontan-1-yl hentriacontanoate, tetratriacontan-1-yl hentriacontanoate, montanyl dotriacontanoate, myricyl dotriacontanoate, dotriacontan-1-yl dotriacontanoate, tetratriacontan-1-yl dotriacontanoate, montanyl tritriacontanoate, myricyl tritriacontanoate, dotriacontan-1-yl tritriacontanoate, tetratriacontan-1-yl tritriacontanoate, and the like.

The aqueous dispersion tends to form a highly water- and oil-resistant coating on a substrate when the number of carbon atoms in the ester compound is large. The wax tends to exhibit excellent dispersibility in water when the number of carbon atoms is small. Thus, the number of carbon atoms is usually 22 or more, preferably 26 or more, more preferably 30 or more, still more preferably 32 or more, and particularly preferably 38 or more, and is usually 80 or less, preferably 76 or less, more preferably 74 or less, and particularly preferably 70 or less. That is, the number of carbon atoms in the ester compound is usually 22 to 80, preferably 26 to 76, more preferably 30 to 74, still more preferably 30 to 70, particularly preferably 32 to 70, and most preferably 38 to 70.

### [Water (D)]

The water used in the present invention may be any water that does not react with the components in the aqueous dispersion of the present invention to produce dispersion-inhibitory components, such as water insolubles. Examples include hard water, soft water, ion-exchanged water, and ultrapure water. In order to prevent the reaction with the anionic surfactant (B) in the present invention, it is preferable to use neutral or basic water.

### [Contents of the components]

In the aqueous dispersion of the present invention, a high content of the nonionic surfactant (A) based on 100 parts by mass of the total of (A) to (C) is preferable for the reason that a coating from the aqueous dispersion of the present invention on a substrate tends to have good resistance to water and oil. On the other hand, a low content of the nonionic surfactant (A) is preferable for the reason that the dispersibility thereof in water is excellent.

In view of the above facts, the content of the nonionic surfactant (A) based on 100 parts by mass of the total of (A) to (C) needs to be 40 parts by mass or more, and is preferably 43 parts by mass or more, more preferably 45 parts by mass or more, and particularly preferably 48 parts by mass or more. On the other hand, the content of the nonionic surfactant (A) needs to be 99 parts by mass or less, and is preferably 95 parts by mass or less, more preferably 90 parts by mass or less, and particularly preferably 85 parts by mass or less. That is, the content of the nonionic surfactant (A) based on 100 parts by mass of the total of (A) to (C) needs to be 40 to 99 parts by mass, and is preferably 43 to 95 parts by mass, more preferably 45 to 90 parts by mass, and particularly preferably 48 to 85 parts by mass.

In the aqueous dispersion of the present invention, a high content of the nonionic surfactant (A) based on 100 parts by mass of the total of (A) to (D) is preferable for the reason that a coating from the aqueous dispersion on a substrate tends to have good resistance to water and oil. On the other hand, a low content is preferable for the reason that the aqueous dispersion has low viscosity and excellent fluidity. In view of these facts, the content of the nonionic surfactant (A) based on 100 parts by mass of the total of (A) to (D) needs to be 5 parts by mass or more, and is preferably 6 parts by mass or more, more preferably 8 parts by mass or more, and particularly preferably 10 parts by mass or more. On the other hand, the content of the nonionic surfactant (A) needs to be 50 parts by mass or less, and is preferably 40 parts by mass or less, more preferably 35 parts by mass or less, and particularly preferably 30 parts by mass or less. That is, the content of the nonionic surfactant (A) based on 100 parts by mass of the total of (A) to (D) needs to be 5 to 50 parts by mass, and is preferably 6 to 40 parts by mass, more preferably 8 to 35 parts by mass, and still more preferably 10 to 30 parts by mass.

In the aqueous dispersion of the present invention, a high content of the anionic surfactant (B) based on 100 parts by mass of the total of (A) to (C) is preferable for the reason that the nonionic surfactant (A) and the wax (C) exhibit excellent dispersibility in water. On the other hand, a low content is preferable for the reason that a coating from the aqueous dispersion on a substrate tends to have good resistance to water and oil.

In view of the above facts, the content of the anionic surfactant (B) based on 100 parts by mass of the total of (A) to (C) is preferably 0.5 parts by mass or more, more preferably 0.7 parts by mass or more, and particularly preferably 1 part by mass or more. On the other hand, the content of the anionic surfactant (B) is preferably 50 parts by mass or less, more preferably 40 parts by mass or less, and particularly preferably 30 parts by mass or less. That is, the content of the anionic surfactant (B) based on 100 parts by mass of the total of (A) to (C) is preferably 0.5 to 50 parts by mass, more preferably 0.7 to 40 parts by mass, and particularly preferably 1 to 30 parts by mass.

In the aqueous dispersion of the present invention, a high content of the anionic surfactant (B) based on 100 parts by mass of the total of (A) to (D) is preferable for the reason that the nonionic surfactant (A) and the wax (C) exhibit excellent dispersibility in water (D). On the other hand, a low content is preferable for the reason that a coating from the aqueous dispersion on a substrate tends to have good resistance to water and oil. In view of these facts, the content of the anionic surfactant (B) based on 100 parts by mass of the total of (A) to (D) is preferably 0.1 part by mass or more, more preferably 0.5 parts by mass or more, and particularly preferably 1 part by mass or more. On the other hand, the content of the anionic surfactant (B) is preferably 30 parts by mass or less, more preferably 25 parts by mass or less, and particularly preferably 20 parts by mass or less. That is, the content of the anionic surfactant (B) based on 100 parts by mass of the total of (A) to (D) is preferably 0.1 to 30 parts by mass, more preferably 0.5 to 25 parts by mass, and particularly preferably 1 to 20 parts by mass.

In the aqueous dispersion of the present invention, a high content of the wax (C) based on 100 parts by mass of the total of (A) to (C) is preferable for the reason that a coating from the aqueous dispersion on a substrate has excellent resistance to water and oil. On the other hand, a low content is preferable for the reasons that the emulsion particle size is reduced and the wax (C) exhibits excellent dispersibility in water, and that the aqueous dispersion tends to have low viscosity. In view of these facts, the content of the wax (C) based on 100 parts by mass of the total of (A) to (C) is preferably 0.5 parts by mass or more, more preferably 0.7 parts by mass or more, and particularly preferably 1 part by mass or more, and is preferably 50 parts by mass or less, more preferably 45 parts by mass or less, and particularly preferably 40 parts by mass or less. That is, the content of the wax (C) based on 100 parts by mass of the total of (A) to (C) is preferably 0.5 to 50 parts by mass, more preferably 0.7 to 45 parts by mass, and particularly preferably 1 to 40 parts by mass.

In the aqueous dispersion of the present invention, a high content of the wax (C) based on 100 parts by mass of the total of (A) to (D) is preferable for the reason that a coating from the aqueous dispersion on a substrate tends to have excellent resistance to water and oil. On the other hand, a low content is preferable for the reasons that the emulsion particle size is reduced and the wax exhibits excellent dispersibility in water, and that the aqueous dispersion tends to have low viscosity. In view of these facts, the content of the wax (C) based on 100 parts by mass of the total of (A) to (D) is preferably 0.01 part by mass or more, more preferably 0.05 parts by mass or more, and particularly preferably 0.1 part by mass or more, and is preferably 30 parts by mass or less, more preferably 25 parts by mass or less, and particularly preferably 20 parts by mass or less. That is, the content of the wax (C) based on 100 parts by mass of the total of (A) to (D) is preferably 0.01 to 30 parts by mass, more preferably 0.05 to 25 parts by mass, and particularly preferably 0.1 to 20 parts by mass.

In the aqueous dispersion of the present invention, a high content of the water (D) is preferable for the reason that the aqueous dispersion tends to have low viscosity and excellent fluidity. On the other hand, a low content is preferable for the reason that a coating from the aqueous dispersion on a substrate tends to exhibit water and oil resistance reliably. In view of these facts, the content of the water (D) based on 100 parts by mass of the total of (A) to (D) is preferably 50 parts by mass or more, more preferably 60 parts by mass or more, and particularly preferably 70 parts by mass or more, and is preferably 94 parts by mass or less, more preferably 92 parts by mass or less, and particularly preferably 90 parts by mass or less. That is, the content of the water (D) based on 100 parts by mass of the total of (A) to (D) is preferably 50 to 94 parts by mass, more preferably 60 to 92 parts by mass, and particularly preferably 70 to 90 parts by mass.

The amount of the anionic surfactant (B) relative to the nonionic surfactant (A) is preferably large for the reason that lowering the viscosity of the aqueous dispersion tends to be easy. On the other hand, the relative amount is preferably small for the reasons that the viscosity lowering effects are produced easily and that the nonionic surfactant (A) easily exhibits its inherent performance. In view of these facts, the amount of the anionic surfactant (B) relative to 100 parts by mass of the nonionic surfactant (A) is preferably 0.1 part by mass or more, more preferably 0.5 parts by mass or more, and particularly preferably 1 part by mass or more, and is preferably 50 parts by mass or less, more preferably 40 parts by mass or less, and particularly preferably 30 parts by mass or less. That is, the amount of the anionic surfactant (B) relative to 100 parts by mass of the nonionic surfactant (A) is preferably 0.1 to 50 parts by mass, more preferably 0.5 to 40 parts by mass, and particularly preferably 1 to 30 parts by mass.

### [Antifoaming agents (E)]

In the aqueous dispersion of the present invention, an antifoaming agent (E) is preferably added to prevent the generation of bubbles during preparation of the aqueous dispersion and to reduce the occurrence of unevenness stemming from bubbles in the aqueous dispersion used as a coating agent.

Preferred examples of the antifoaming agents (E) include silicone antifoaming agents, polyether antifoaming agents, olefin antifoaming agents, and alcohol antifoaming agents. Among these, silicone antifoaming agents, polyether antifoaming agents, and olefin antifoaming agents are preferable because they have high antifoaming performance during dispersant preparation.

The antifoaming agents may be used singly, or two or more may be used in combination.

When the antifoaming agent (E) is used, the content thereof in the aqueous dispersion is preferably low for the reason that the coating agent exhibits its performance easily. On the other hand, a high content is preferable for the reason that the antifoaming effects are produced easily. In view of these facts, the content of the antifoaming agent (E) based on 100 parts by mass of the total of (A) to (D) is preferably 0.01 part by mass or more, more preferably 0.05 parts by mass or more, and particularly preferably 0.1 part by mass or more, and is preferably 5 parts by mass or less, more preferably 4 parts by mass or less, and particularly preferably 3 parts by mass or less. That is, the content of the antifoaming agent (E) based on 100 parts by mass of the total of (A) to (D) is preferably 0.01 to 5 parts by mass, more preferably 0.05 to 4 parts by mass, and particularly preferably 0.1 to 3 parts by mass.

### [Additional components]

In addition to the components described above, additional components, such as low-molecular emulsifiers, high-molecular emulsifiers, and alcohol compounds, may be added to the aqueous dispersion of the present invention as long as the advantageous effects of the present invention are not impaired.

Specific examples of low-molecular emulsifiers include nonionic low-molecular emulsifiers such as fatty acid diethanolamide polyoxyethylene alkylphenyl ether, and the like, and anionic low-molecular emulsifiers such as alkyl sulfate triethanolamine, and the like.

Specific examples of high-molecular emulsifiers include nonionic polymer emulsifiers such as polyvinyl alcohol, polyoxyethylene alkyl ether, polyoxypropylene/polyoxyethylene block copolymers, polymer starch, and the like, and anionic polymer emulsifiers such as styrene/maleate copolymers, formalin bound naphthalene sulfonates, polyacrylates, carboxymethyl cellulose metal salts, olefin/maleate copolymers, polystyrene sulfonates, acrylamide/acrylate copolymers, alginates, and the like.

Specific examples of alcohol compounds include higher alcohols such as cetanol, stearyl alcohol, and the like, (poly)ethylene glycol, (poly)propylene glycol, polytetramethylene ether glycol, polycarbonate diol, glycerin, trimethylolpropane, pentaerythritol, erythritol, sorbitol and isosorbide, and the like.

Among these, polyols such as (poly)ethylene glycol, (poly)propylene glycol, trimethylolpropane, polytetramethylene ether glycol, polycarbonate diol, glycerin, trimethylolpropane, pentaerythritol, sorbitol, isosorbide, and the like tend to have high dispersion stability and are therefore preferred.

The amounts of the respective additives may be determined appropriately but are preferably small for the reason that it tends to be easy to obtain low viscosity of the aqueous dispersion and a small emulsion particle size. For example, the content of these additives is preferably 50 parts by mass or less, and more preferably 30 parts by mass or less with respect to 100 parts by mass of the total of the nonionic surfactant (A) and the anionic surfactant (B).

In addition to the components described above, additional additives may be added to the aqueous dispersion of the present invention as long as the advantageous effects of the present invention are not impaired. Examples thereof include preservatives, smoothing agents, antistatic agents, flame retardants, tackifiers, fillers, ultraviolet absorbers, colorants, antioxidants, functional dyes, inorganic particles, and organic solvents. The amounts of the respective additives may be determined appropriately. For example, the content of these additives is preferably 30 parts by mass or less, and particularly preferably 20 parts by mass or less with respect to 100 parts by mass of the total of the nonionic surfactant and the anionic surfactant.

The aqueous dispersion of the present invention may contain inorganic particles for the purpose of, for example, enhancing the water and oil resistance of a coating from the aqueous dispersion on a substrate. When inorganic particles are used, the content of the inorganic particles in the aqueous dispersion of the present invention is preferably low in view of the dispersion stability of the aqueous dispersion. Thus, when the aqueous dispersion of the present invention contains inorganic particles, the content of the inorganic particles in the aqueous dispersion of the present invention is preferably 2 mass% or less, more preferably 1 mass% or less, and particularly preferably 0.5 mass% or less.

Examples of the inorganic particles include calcium carbonate, kaolin, clay, talc, magnesium carbonate, magnesium oxide, silicic acid, silicic acid salts, silica, aluminum hydroxide, calcium hydroxide, zinc hydroxide, zinc oxide, barium sulfate, titanium oxide, white clay, and bentonite.

The particle size of the inorganic particles is preferably large from the point of view of dispersion stability and is preferably small from the point of view of the uniformity of a coating film. Thus, the average particle size of the inorganic particles is preferably 0.1 um or more, more preferably 0.5 µm or more, and is preferably 20 µm or less, more preferably 10 µm or less. That is, the average particle size of the inorganic particles is preferably 0.1 to 20 µm, and more preferably 0.5 to 10 µm.

### [Solid concentration]

The solid concentration in the aqueous dispersion of the present invention (the total amount of the components other than water contained in the aqueous dispersion of the present invention) is preferably low for the reason that the aqueous dispersion has low viscosity and excellent fluidity. Thus, the solid concentration in the aqueous dispersion of the present invention is preferably 50 mass% or less, more preferably 40 mass% or less, and particularly preferably 30 mass% or less. On the other hand, the solid concentration in the aqueous dispersion of the present invention is preferably 1 mass% or more from the point of view of ensuring the contents of the respective components.

### [Viscosity]

The viscosity of the aqueous dispersion of the present invention is preferably low for the reason that the aqueous dispersion can be handled with excellent workability. Thus, the viscosity is preferably 5,000 mPa·s or less, more preferably 3,500 mPa·s or less, and particularly preferably 2,000 mPa·s or less. While the lower limit of the viscosity of the aqueous dispersion of the present invention is not particularly limited, the viscosity of the aqueous dispersion of the present invention is usually 0.1 mPa·s or more.

The viscosity in the present invention is a value measured with a Brookfield viscometer at a temperature of 25°C and a shear rate of 100 rpm (unit: mPa·s).

### [Average emulsion particle size]

The average emulsion particle size in the aqueous dispersion of the present invention is preferably small for the reason that the aqueous dispersion can be handled with excellent workability. Thus, the average emulsion particle size in the aqueous dispersion of the present invention is preferably less than 100 µm, more preferably 50 µm or less, and still more preferably 10 µm or less.

The average particle size in the present invention is a value measured with a laser diffractometer (laser diffraction scattering method) at a temperature of 25°C (unit: µm).

### [Methods for producing the aqueous nonionic surfactant dispersion]

The aqueous dispersion of the present invention may be produced in accordance with a known general method for producing an aqueous dispersion or an emulsion.

For example, the ingredient components may be blended in any of the following orders.
i) The nonionic surfactant (A), the anionic surfactant (B), and the wax (C) are mixed beforehand, and the mixture is added to water.
ii) The anionic surfactant (B) is dispersed in water, and the nonionic surfactant (A) and the wax (C) are added to the dispersion.
iii) The nonionic surfactant (A) is dispersed in water, and the anionic surfactant (B) and the wax (C) are added to the dispersion.
iv) The nonionic surfactant (A) and the wax (C) are dispersed in water, and the anionic surfactant (B) is added to the dispersion.
v) The anionic surfactant (B) and the wax (C) are dispersed in water, and the nonionic surfactant (A) is added to the dispersion.

Among these methods, the method i) or ii) is preferable from the points of view of workability and productivity.

The components are preferably mixed under the following conditions.

The mixing time in each step is preferably long for the reason that the components will be dispersed sufficiently in the liquid, and is preferably short for the reason that the productivity of the aqueous dispersion is enhanced. Thus, the mixing time is usually 10 minutes to 24 hours, and preferably 20 minutes to 6 hours.

The mixing temperature in each step is preferably a temperature that will not freeze or evaporate water, and is usually 0 to 100°C, preferably 40 to 90°C.

When the system has been heated to room temperature or above, cooling is performed. The cooling may be performed by a common technique. For example, the system may be cooled rapidly by contact with a refrigerant or may be cooled naturally by contact with air environment. The cooling technique is selected in consideration of the production volume and the industrial efficiency of the aqueous dispersion that is produced.

The pressure in each step may be atmospheric pressure or may be an increased or reduced pressure. The pressure is selected in accordance with properties of the aqueous dispersion that is produced (such as concentration, viscosity, particle size, and production volume) and the type of the dispersing method described below.

The components may be dispersed in water by any of general dispersing methods that apply a shear force, such as stirring, shaking, ultrasonication, and mechanical extrusion. The method is selected in accordance with properties of the aqueous dispersion that is produced (such as concentration, viscosity, particle size, and production volume).

### [Use applications]

The aqueous dispersion of the present invention is useful as an additive for such products as foods, cosmetics, and pharmaceuticals. In addition, the aqueous dispersion can find use in various applications, such as antifogging agents, antistatic agents, compatibilizers, paints, coating agents, agents for imparting water and oil resistance to paper, adhesives, dispersants for various organic and inorganic particles, and additives for thermoplastic resins and thermosetting resins.

The aqueous dispersion of the present invention is suited as a coating agent for various substrates. In particular, the aqueous dispersion is suited as a coating agent for packaging materials, such as food packaging materials.

Furthermore, the aqueous dispersion of the present invention is suited as a water- and oil-resistant coating agent for paper substrates, plastic substrates, or wood substrates, and is more suited as a water- and oil-resistant coating agent for paper substrates or plastic substrates. For example, a paper product may be produced by coating or impregnating one or both sides of a paper substrate with the aqueous dispersion of the present invention to form a coating layer.

Furthermore, a paper product may be produced from a mixture of the aqueous dispersion of the present invention with a pulp slurry.

Furthermore, the aqueous dispersion of the present invention may be applied to one or both sides of paper, a plastic substrate, or a wood substrate to form a multilayer structure having a coating layer formed from the aqueous dispersion.

The substrates in the multilayer structures will be described later.

### [Films]

With the aqueous dispersion of the present invention, a film may be formed on a substrate by volatilizing components, such as water, from the aqueous dispersion. That is, the aqueous dispersion of the present invention can give a film that includes a nonionic surfactant (A), an anionic surfactant (B), and a wax (C), wherein the wax (C) includes an ester compound having a fatty acid-derived structural moiety and an aliphatic alcohol-derived structural moiety, and the content of the nonionic surfactant (A) is 40 to 99 parts by mass based on 100 parts by mass of the total of (A) to (C) (hereinafter, the film is also written as the "film of the present invention").

Here, the components, the composition, and other configurations in the film of the present invention are the same as the components other than water and the composition of the components in the aqueous dispersion of the present invention. For example, it is preferable that the film of the present invention do not contain inorganic particles or do contain 2 mass% or less of inorganic particles.

The thickness of the film of the present invention is preferably large for the reasons that the film will reliably coat the substrate, and the film has high strength and resists chipping due to friction or the like. On the other hand, the thickness of the film is preferably small for the reasons that the film ingredient costs can be saved and the film will not be easily separated from the substrate when a force is applied. Thus, the thickness of the film of the present invention is preferably 0.1 um or more, more preferably 0.2 um or more, still more preferably 0.5 um or more, and is preferably 30 µm or less, more preferably 25 µm or less, still more preferably 20 um or less, and particularly preferably 15 µm or less. That is, the thickness of the film of the present invention is preferably 0.1 to 30 µm, more preferably 0.2 to 20 µm, and still more preferably 0.5 to 15 µm.

The film of the present invention is preferably used in packaging materials because of its excellent water resistance and oil resistance, and is more preferably used in food packaging materials because the film also has high safety. That is, a packaging material having the film of the present invention and a food packaging material having the film of the present invention can be obtained.

### [Multilayer structures]

The film of the present invention can be obtained using the aqueous dispersion of the present invention. By laminating the film of the present invention onto a substrate, a multilayer structure of the present invention can be obtained. Here, the substrate is preferably paper, plastic, wood, or the like. That is, a multilayer structure of the present invention can be obtained that includes a substrate including at least any of paper, plastic, and wood, and the film of the present invention.

Examples of the paper substrates include woodfree paper, medium grade paper, coated paper, foil paper, glassine paper, paraffin paper, and parchment paper.

Examples of the plastic substrates include polyethylene, polypropylene, polyethylene terephthalate, polyethylene naphthalate, vinyl chloride, polystyrene, acrylic, polycarbonate, polyphenylene sulfide, fluororesin, polyether ether ketone, polyethersulfone, aramid, polyimide, polyamide, cellophane, and triacetylcellulose.

Among those described above, paper substrates, cellophane, and triacetylcellulose are preferable because these substrates have high affinity for water and are easy to coat with the aqueous dispersion.

### EXAMPLES

The present invention will be described in greater detail below by way of EXAMPLES. The present invention is not limited to the following EXAMPLES as long as the present invention does not depart from the spirit thereof. References to "parts" indicate parts by mass.

### [Evaluation methods]

The aqueous dispersions prepared in EXAMPLES and COMPARATIVE EXAMPLES were evaluated as follows.

Glassine paper (basis weight: 25.8 g/m², manufactured by SHIMOJIMA CO., Ltd.) was used as a paper substrate.

### <Aqueous dispersion viscosity>

The viscosity of the aqueous dispersion was measured one day after preparation and was evaluated according to the criteria below. The viscosity was measured using a Brookfield viscometer at a temperature of 25°C and a shear rate of 100 rpm (unit: mPa·s).

### (Evaluation criteria)

| | |
|---|---|
| ○ | 2000 mPa·s or less |
| Δ | Higher than 2000 mPa·s and lower than 5000 mPa·s |
| × | 5000 mPa·s or more |

### <Average particle size in aqueous dispersion>

One day after preparation of the dispersion, the average emulsion particle size was measured at 25°C using a laser diffractometer ("Partica LA-950V2" manufactured by HORIBA, Ltd.).

### <Water contact angle of coated paper>

2 µL of water was dropped onto the paper substrate coated with the aqueous dispersion, and the water contact angle after 1 second was measured with a solid-liquid interface analyzer ("DropMaster 500" manufactured by Kyowa Interface Science Co., Ltd.) and was evaluated according to the criteria below.

The water contact angle of the paper substrate before being coated with the aqueous dispersion was 36.1°, and the rating was ×.

### (Evaluation criteria)

| | |
|---|---|
| ○ | 90° or more |
| Δ | More than 50° and less than 90° |
| × | 50° or less |

### <Water resistance of coated paper>

One droplet of water was dropped onto the paper substrate coated with the aqueous dispersion. After prescribed amounts of time (1 minute intervals, maximum 10 minutes), the water was wiped off and the surface of the paper was visually observed. When a water mark was found, the elapsed time 1 minute before that time was recorded and was evaluated according to the criteria below.

The water resistance of the paper substrate before being coated with the aqueous dispersion was 0 min, and the rating was ×.

### (Evaluation criteria)

| | |
|---|---|
| ○ | 2 min or more |
| Δ | 1 min or more and less than 2 min |
| × | 0 min |

### <Water absorptiveness of coated paper>

The water absorptiveness of the paper substrate coated with the aqueous dispersion was measured in accordance with JIS P8140: 1998. The test area was 100 cm², the contact time was 30 seconds, and the test temperature was 23°C. The water absorptiveness was evaluated according to the criteria below.

The water absorptiveness of the paper substrate before being coated with the aqueous dispersion was 16.7 g/m², and the rating was ×.

### (Evaluation criteria)

| | |
|---|---|
| ○ | Less than 0.60 g/m² |
| Δ | 0.60 or more and less than 1.0 g/m² |
| × | 1.0 g/m² or more |

### <Oil resistance of coated paper>

One droplet of castor oil (manufactured by Kishida Chemical Co., Ltd.) was dropped onto the paper substrate coated with the aqueous dispersion. After being heated in an oven at 80°C for prescribed amounts of time (1 minute intervals, maximum 5 minutes), the coated paper was removed from the oven and the castor oil on the surface was wiped off. The surface of the paper was visually observed. When the oil had bled, the elapsed time 1 minute before that time was recorded and was evaluated according to the criteria below.

The oil resistance of the paper substrate before being coated with the aqueous dispersion was 0 min, and the rating was ×.

### (Evaluation criteria)

| | |
|---|---|
| ○ | 4 min or more |
| Δ | 1 min or more and 3 min or less |
| × | 0 min |

### [Ingredients]

The ingredient components used in the preparation of aqueous dispersions in EXAMPLES and COMPARATIVE EXAMPLES are as follows.

### <Nonionic surfactants (A)>

(A-1): Stearic acid-based sucrose fatty acid ester (product name: Ryoto Sugar Ester S-370, manufactured by Mitsubishi Chemical Corporation)
(A-2): Sorbitan fatty acid ester (product name: EMASOL S-10V, manufactured by Kao Corporation)

### <Anionic surfactant (B)>

(B-1): Sodium stearate (product name: sodium stearate, manufactured by Nitto Chemical Industry Co., Ltd.)

### <Waxes (C)>

(C-1): Rice bran wax (product name: NatureFine R331, manufactured by DSP GOKYO FOOD & CHEMICAL Co., Ltd., total number of carbon atoms: at least 40)
(C-2): Carnauba wax (product name: Carnauba wax No. 1 powder, manufactured by TOYOCHEM CO., LTD., total number of carbon atoms: at least 40)
(C-3): Behenyl behenate (product name: M-2222SL, manufactured by NOF CORPORATION, total number of carbon atoms: 44)
(C-4): Stearyl stearate (product name: EXCEPARL SS, manufactured by Kao Corporation, total number of carbon atoms: 36)

### <Water (D)>

(D-1): Ultrapure water

### <Antifoaming agent (E)>

(E-1): Silicone antifoaming agent (product name: KM-72, manufactured by Shin-Etsu Chemical Co., Ltd.)

### [EXAMPLES 1 to 6 and COMPARATIVE EXAMPLE 1]

### <Preparation of aqueous dispersions>

The components (A) to (E) were mixed in the amounts (parts) described in Table 1. The mixture was heated to 90°C and was stirred for 120 minutes. Subsequently, the mixture was rapidly cooled to 25°C in an ice bath and thereby the viscosity was lowered. An aqueous dispersion was thus obtained. The aqueous dispersion obtained was analyzed to measure the viscosity and the average particle size. The results are described in Table 1.

### <Application and evaluation>

Glassine paper (basis weight: 25.8 g/m², manufactured by SHIMOJIMA CO., Ltd.) was used as a paper substrate. The aqueous dispersion prepared was applied to the paper substrate with use of an applicator (dry coating weight: 10 g/m²) and was dried by heating at 120°C for 5 minutes. Coated paper was thus obtained. The coated paper obtained was analyzed by the aforementioned methods to measure the water contact angle, the water resistance, the water absorptiveness, and the oil resistance. The results are described in Table 1.

### [COMPARATIVE EXAMPLE 2]

The compounds were mixed in the amounts (parts) described in Table 1. The mixture was heated to 90°C and was stirred for 120 minutes. The mixture was then rapidly cooled to 25°C in an ice bath. The aqueous dispersion thus obtained was too viscous to apply and thus could not be evaluated for water contact angle, water resistance, water absorptiveness, and oil resistance.

**[Table 1]**

| | | **EX. 1** | **EX. 2** | **EX. 3** | **EX. 4** | **EX. 5** | **EX. 6** | **COMP. EX. 1** | **COMP. EX. 2** |
|---|---|---|---|---|---|---|---|---|---|
| **Nonionic surfactants** (A) | (A-1) | 16 | 16.3 | 16 | 16 | 16 | - | 17 | 7 |
| | (A-2) | - | - | - | - | - | 16 | - | - |
| **Anionic surfactants** (B) | (B-1) | 3 | 5 | 3 | 3 | 3 | 3 | 3 | 3 |
| **Waxes** (C) | (C-1) | 1 | 3.7 | - | - | - | 1 | - | 10 |
| | (C-2) | | | 1 | - | | | | |
| | (C-3) | - | - | - | 1 | - | - | - | - |
| | (C-4) | - | - | - | - | 1 | - | - | - |
| **Water** (D) | (D-1) | 80 | 75 | 80 | 80 | 80 | 80 | 80 | 80 |
| **Antifoaming agent** (E) | (E-1) | 2.8 | 2.8 | 2.8 | 2.8 | 2.8 | 2.8 | 2.8 | 2.8 |
| **Dispersion viscosity** | (mPa·s) | 1300 | 1502 | 1252 | 878 | 1122 | 1130 | 1750 | >10000 |
| | **Rating** | ○ | ○ | ○ | ○ | ○ | ○ | ○ | × |
| **Average particle size in dispersion** | (µm) | 1.37 | 4.81 | 1.27 | 2.15 | 0.9 | 0.62 | 0.61 | 37.59 |
| **Water contact angle of coated paper** | (°) | 107 | 103 | 103 | 108 | 103.3 | 109 | 98.2 | **(unable to be evaluated)** |
| | **Rating** | ○ | ○ | ○ | ○ | ○ | ○ | ○ | **(unable to be evaluated)** |
| **Water resistance of coated paper** | (min) | 10 | 5 | 10 | 2 | 1 | 1 | 0 | **(unable to be evaluated)** |
| | **Rating** | ○ | ○ | ○ | ○ | Δ | Δ | × | **(unable to be evaluated)** |
| **Water absorptiveness of coated paper** | (g/m²) | 0.55 | 0.07 | 0.25 | 0.58 | 0.39 | 0.91 | 0.35 | **(unable to be evaluated)** |
| | **Rating** | ○ | ○ | ○ | ○ | ○ | Δ | ○ | **(unable to be evaluated)** |
| **Oil resistance of coated paper** | (min) | 5 | 5 | 4 | 2 | 2 | 1 | 2 | **(unable to be evaluated)** |
| | **Rating** | ○ | ○ | ○ | Δ | Δ | Δ | Δ | **(unable to be evaluated)** |

From Table 1, it was confirmed that the paper substrates coated with the aqueous dispersions of the present invention were water repellent with a water contact angle of 90° or more.

It was also confirmed that the aqueous dispersion of COMPARATIVE EXAMPLE 1 that did not contain the wax (C) gave a poorly water resistant coating on the paper substrate but the aqueous dispersions of EXAMPLES 1 to 6 containing the wax (C) formed a coating with enhanced water resistance on the paper substrate.

Furthermore, the comparison of EXAMPLES 1 and 2 with COMPARATIVE EXAMPLE 2 shows that the viscosity of the aqueous dispersion can be reduced when the content of the nonionic surfactant (A) surpasses the content of the wax (C). Furthermore, it was confirmed that the aqueous dispersions of the present invention can attain enhancements not only in water resistance but also in oil resistance on the substrate.

Specifically, it has been corroborated that the aqueous dispersion of the present invention has low viscosity and excels in dispersion stability (storage stability) and workability, and a film formed from the aqueous dispersion has excellent water resistance and oil resistance.

Although the present invention has been described in detail with reference to particular embodiments, it will be apparent to those skilled in the art that various modifications may be made therein without departing from the spirit and scope of the present invention.

The present application is based on Japanese Patent Application No. 2021-205716 filed on December 20, 2021, which is incorporated herein by reference in their entirety.

### Industrial Applicability

The aqueous dispersion of the present invention is useful as a water- and oil-resistant coating agent, and can find use in various applications, such as additives for such products as foods, cosmetics, and pharmaceuticals, as well as antifogging agents, antistatic agents, compatibilizers, paints, adhesives, dispersants for various organic and inorganic particles, and additives for thermoplastic resins and thermosetting resins.

## Claims

1. An aqueous dispersion comprising a nonionic surfactant (A), an anionic surfactant (B), and a wax (C) dispersed in water, wherein
the wax (C) comprises an ester compound having a fatty acid-derived structural moiety and an aliphatic alcohol-derived structural moiety, and
the content of the nonionic surfactant (A) is 40 to 99 parts by mass based on 100 parts by mass of the total of the nonionic surfactant (A), the anionic surfactant (B), and the wax (C), and is 5 to 50 parts by mass based on 100 parts by mass of the total of the nonionic surfactant (A), the anionic surfactant (B), the wax (C), and the water.

2. The aqueous dispersion according to claim 1, which has a solid concentration of 50 mass% or less.

3. The aqueous dispersion according to claim 1, which does not contain inorganic particles or contains 2 mass% or less of inorganic particles.

4. The aqueous dispersion according to claim 1, which is a coating agent for packaging materials.

5. The aqueous dispersion according to claim 1, wherein the nonionic surfactant (A) is at least one surfactant selected from polyol fatty acid esters, polyoxyethylene alkyl ethers, and polyoxyethylene alkylamines.

6. The aqueous dispersion according to claim 5, wherein the polyol fatty acid esters are sucrose fatty acid esters and/or sorbitan fatty acid esters.

7. The aqueous dispersion according to claim 6, wherein the polyol fatty acid esters are sucrose fatty acid esters.

8. The aqueous dispersion according to claim 1, wherein the anionic surfactant (B) is a fatty acid metal salt.

9. The aqueous dispersion according to claim 1, wherein the wax (C) is a C30-70 ester compound.

10. The aqueous dispersion according to claim 1, further comprising an antifoaming agent (E).

11. The aqueous dispersion according to claim 10, wherein the antifoaming agent (E) is at least one antifoaming agent selected from silicone antifoaming agents, polyether antifoaming agents, olefin antifoaming agents, and alcohol antifoaming agents.

12. The aqueous dispersion according to claim 1, wherein the average emulsion particle size in the aqueous dispersion measured by a laser diffraction scattering method is less than 100 um.

13. A paper product obtained by coating or impregnating a paper substrate with the aqueous dispersion described in any one of claims 1 to 12.

14. A paper product obtained from a pulp slurry containing the aqueous dispersion described in any one of claims 1 to 12.

15. A film comprising a nonionic surfactant (A), an anionic surfactant (B), and a wax (C), wherein
the wax (C) comprises an ester compound having a fatty acid-derived structural moiety and an aliphatic alcohol-derived structural moiety, and
the content of the nonionic surfactant (A) is 40 to 99 parts by mass based on 100 parts by mass of the total of the nonionic surfactant (A), the anionic surfactant (B), and the wax (C).

16. The film according to claim 15, which does not contain inorganic particles or contains 2 mass% or less of inorganic particles.

17. The film according to claim 15, wherein the nonionic surfactant (A) is at least one surfactant selected from polyol fatty acid esters, polyoxyethylene alkyl ethers, and polyoxyethylene alkylamines.

18. The film according to claim 17, wherein the polyol fatty acid esters are sucrose fatty acid esters and/or sorbitan fatty acid esters.

19. The film according to claim 18, wherein the polyol fatty acid esters are sucrose fatty acid esters.

20. The film according to claim 15, which has a thickness of 0.1 to 30 um.

21. A packaging material having the film described in any one of claims 15 to 20.

22. A food packaging material having the film described in any one of claims 15 to 20.

23. A multilayer structure comprising a substrate comprising at least any of paper, plastic, and wood, and the film described in any one of claims 15 to 20.
